# EUROPÄISCHE PATENTSCHRIFT

(11) **EP 2 161 247 B1**
(45) Veröffentlichungstag und Bekanntmachung des Hinweises auf die Patenterteilung: **24.10.2012**
(21) Anmeldenummer: 08163792.8
(22) Anmeldetag: 05.09.2008
(51) Int. Cl.: C04B 40/00, C04B 28/02, C08K 5/00

(54) **Verfahren zur Stabilisierung von Polycarboxylaten**
Method for stabilising polycarboxylates
Procédé de stabilisation de polycarboxylates

(43) Veröffentlichungstag der Anmeldung: 10.03.2010
(73) Patentinhaber: Sika Technology AG, 6340 Baar (CH)
(72) Erfinder: Bürge, Christian, 5503, Schafisheim (CH); Sulser, Ueli, 8103, Unterengstringen (CH); Wombacher, Franz, 8916, Jonen (CH); Honert, Dieter, 69234, Dielheim (DE); Blask, Oliver, 68723, Oftersheim (DE)
(74) Vertreter: Sika Patent Attorneys

(56) Entgegenhaltungen:
- EP-A- 1 260 490
- DE-A1- 19 843 730
- DE-A1- 19 905 488

## Beschreibung

### Technisches Gebiet

Die vorliegende Erfindung betrifft das Gebiet der Zusatzmittel für hydraulisch abbindende Systeme, insbesondere der Dispergiermittel für Betonzusammensetzungen. Insbesondere betrifft die Erfindung ein Verfahren zur Stabilisierung von Polycarboxylaten in Gegenwart von anorganischem Pulver bei erhöhter Temperatur durch Verwendung mindestens eines Antioxidationsmittels. Zudem betrifft die Erfindung die Herstellung von temperaturstabilen Polycarboxylaten und dessen Verwendung beim Lagern mit anorganischem Pulver, oder beim Mahlen des anorganischen Pulvers und gegebenenfalls anschliessendem Lagern.

### Stand der Technik

Polymere aus α- β-ungesättigten Carbonsäuren mit PolyoxyalkylenSeitenketten, sogenannte Polycarboxylate, werden bereits seit längerem in der Betontechnologie als Dispergiermittel, insbesondere als Hochleistungsverflüssiger, wegen ihrer starken Wasserreduktion eingesetzt. Diese Polymere haben eine Kammpolymerstruktur. Diese Polymere verbessern bei gleichem Wasser/Zement (w/z) - Wert die Verarbeitbarkeit des Betons oder vermindern bei gleicher Verarbeitbarkeit den Wasseranspruch und damit den w/z-Wert, was zu einer Erhöhung der Druckfestigkeit und der Dichtigkeit führt.

Die herkömmlichen Polycarboxylate sind bei erhöhter Temperatur nur bedingt stabil und werden innert Tagen zerstört, so dass sie ihre Wirkung nicht mehr entfalten können. Es hat sich insbesondere gezeigt, dass die Wirkung der Polycarboxylate stark abnimmt, wenn sie in Gegenwart von anorganischen Pulvern, insbesondere hydraulischen Bindemitteln, bei erhöhter Temperatur verwendet werden. Solche Probleme treten beispielsweise bei der Lagerung von hydraulischen Bindemitteln oder beim Mahlen von hydraulischen Bindemitteln auf.

Bei der Lagerung werden die hydraulischen Bindemittel meist bei über 80°C, oft sogar bei über 120°C in Silos aufbewahrt. Zudem liegen in Silos, insbesondere in Hochsilos, hohe Drücke vor, die besondere Anforderungen an die Stabilisierung von Polymeren stellen. Werden dem Bindemittel zuvor Polycarboxylate zugegeben, was insbesondere bei der Herstellung von Fertigmischungen, beispielsweise Zementfertigmischungen, erwünscht ist, nimmt nach der Lagerung bei den hohen Temperaturen die Wirkungsweise der Polycarboxylate stark ab.

Polycarboxylate werden zum Teil auch als Mahlhilfen beim Mahlen von hydraulischen Bindemitteln, beispielsweise von Klinkern, eingesetzt. Da beim Mahlen ebenfalls hohe Temperaturen vorliegen, können die herkömmlichen Polycarboxylate weitgehend zerstört werden und ihre Wirkung nicht mehr entfalten.

Es sind Stabilisatoren bekannt, welche zur Stabilisierung von Polymeren, insbesondere bei der Polymerherstellung oder bei der Verwendung als Klebstoff, verwendet werden können. Bei der Polymerherstellung oder im Klebstoff liegen allerdings ganz andere Bedingungen vor, als wenn die Polymere in Gegenwart von anorganischen Pulvern verwendet werden. In Gegenwart von anorganischen Pulvern liegen die Polycarboxylate über eine grosse Oberfläche verteilt vor. Dadurch sind sie anfälliger und werden schneller zersetzt. Dies erschwert es zusätzlich, die Polycarboxylate insbesondere bei erhöhter Temperatur zu stabilisieren.

Es besteht daher das Bedürfnis, ein Verfahren zur Stabilisierung von Polycarboxylaten zu entwickeln, damit die Polycarboxylate auch bei hoher Temperatur in Gegenwart von anorganischen Pulvern über längere Zeit stabil gehalten werden können.

### Darstellung der Erfindung

Aufgabe der vorliegenden Erfindung ist es daher, ein Verfahren zur Verfügung zu stellen, welches Polycarboxylat Polymere, insbesondere Polycarboxylatether, in Gegenwart von anorganischem Pulver bei erhöhter Temperatur stabilisiert, und welches geeignet ist, temperaturstabile Polymere herzustellen.

Überraschenderweise wurde gefunden, dass dies durch ein Verfahren gemäss Anspruch 1 erreicht werden kann. Es konnte nun festgestellt werden, dass Polycarboxylate, insbesondere Polycarboxylatether (PCE) Polymere, mit Antioxidationsmitteln, insbesondere mit Antioxidationsmitteln umfassend mindestens ein substituiertes Phenol, stabilisiert werden können und auch bei erhöhter Temperatur in Gegenwart von anorganischem Pulver ihre Wirkung über längere Zeit beibehalten können. Insbesondere überraschend ist, dass insbesondere Antioxidationsmittel, welche mindestens ein substituiertes Phenol umfassen, besonders geeignet sind, Polycarboxylate zu stabilisieren, welche in der Mischung mit einem anorganischen Pulver über eine grosse Oberfläche verteilt vorliegen im Gegensatz zu reinen Polymermischungen, in denen die Polymere konzentriert in Masse vorliegen.

Zudem bieten die erfindungsgemäss verwendeten Antioxidationsmittel einen Langzeitschutz bei hohen Temperaturen über mehrere Wochen oder sogar Monate. Weiterhin hat sich gezeigt, dass auf diese Weise stabilisierte Polymere ihre Wirkung als Dispergiermittel, insbesondere als Verflüssiger auch noch erhalten können, nachdem sie beim Mahlprozess oder bei langer Lagerung hohen Temperaturen ausgesetzt waren.

Weitere vorteilhafte Ausgestaltungen der Erfindung ergeben sich aus den Unteransprüchen.

### Wege zur Ausführung der Erfindung

Die vorliegende Erfindung betrifft ein Verfahren zur Stabilisierung von Polycarboxylaten, insbesondere von Polycarboxylatethern (PCE) in Gegenwart von anorganischem Pulver bei erhöhter Temperatur gemäss Anspruch 1, wobei das Polycarboxylat Polymer mit mindestens einem Antioxidationsmittel versetzt wird, dadurch gekennzeichnet, dass das Polycarboxylat in flüssiger Form zum anorganischen Pulver zugegeben wird.

Das anorganische Pulver, in Gegenwart dessen die Polycarboxylate stabilisiert werden, kann insbesondere ein mineralisches Bindemittel sein, insbesondere ein hydraulisches Bindemittel ausgewählt aus der Gruppe Zement, insbesondere Portlandzemente oder Tonerdeschmelzzemente und respektive deren Mischungen mit Flugaschen, Silica fume, Schlacke, Hüttensande und Kalksteinfüller oder gebrannter Kalk, Klinker, ein latent hydraulisches Pulver, inertes mikroskopisches Pulver oder Gips.

Unter dem Begriff "Stabilisierung" wird insbesondere verstanden, dass die Polycarboxylate über eine längere Zeit nicht abgebaut werden und somit ihre Wirkung aufrecht erhalten bleibt. Vorzugsweise bleibt die Stabilisierung des Polycarboxylat Polymers mindestens eine Woche, vorzugsweise mindestens 4 Wochen, erhalten.

Unter dem Begriff "erhöhte Temperatur" wird eine Temperatur von mindestens 40°C, bevorzugt 80 bis 160°C verstanden. Beispielsweise werden Zementklinker nach dem Brennprozess bei über 1000°C üblicherweise auf eine Temperatur von etwa 100 bis 200°C abgekühlt und normalerweise bei einer Temperatur von etwa 80 bis 150°C, insbesondere bei etwa 80 bis 120°C gelagert, beispielsweise in Silos. Somit liegt eine "erhöhte Temperatur" beispielsweise bei der Lagerung von anorganischem Pulver, beispielsweise bei der Lagerung von Zement oder Zementklinker, vor.

Die "erhöhte Temperatur" kann auch beim Mahlen des anorganischen Pulvers auftreten.

In einer Ausführungsform des erfindungsgemässen Verfahrens wird das mindestens eine Antioxidationsmittel beim Fördern des anorganischen Pulvers, insbesondere beim Fördern von Zement, auf das anorganische Pulver aufgetragen. Vorzugsweise wird das anorganische Pulver, insbesondere Zement, während des Förderungsprozesses, beispielsweise in Transportkanälen, zur Lagerstätte, beispielsweise zum Silo oder zu Transportmitteln wie z.B. einem Lastwagen, mit mindestens einem Antioxidationsmittel versetzt, insbesondere beschichtet.

Das erfindungsgemässe Verfahren betrifft ein Verfahren zur Stabilisierung von Polycarboxylaten, insbesondere von Polycarboxylatethern (PCE), welches den Schritt umfasst, dass das Polycarboxylat Polymer vor, währen oder nach der Zugabe des Polycarboxylat Polymers zum anorganischen Pulver mit mindestens einem Antioxidationsmittel versetzt wird, und dass die Stabilisierung mindestens eine Woche, vorzugsweise mindestens 4 Wochen erhalten bleibt bei Temperaturen von mindestens 40°C, bevorzugst mindestens 80°C, noch mehr bevorzugt bei mindestens 100°C.

In einer weiteren Ausführungsform wird das mindestens eine Antioxidationsmittel vor dem Mahlen des anorganischen Pulvers, insbesondere vor dem Mahlen des Zementklinkers, zum anorganischen Pulver zugegeben.

Das Antioxidationsmittel kann gleichzeitig, vor oder nach dem Polycarboxylat zum anorganischen Pulver zugegeben werden.

In einer Ausführungsform wird das Antioxidationsmittel vorgängig mit dem Polycarboxylat vermischt und diese Mischung wird dann zu einem gewünschten Zeitpunkt während des Herstellprozesses des anorganischen Pulvers, insbesondere des Zements, beispielsweise vor dem Mahlen, oder beim Fördern des anorganischen Pulvers vor der Lagerung, mit dem anorganischen Pulver vermischt, oder auf das anorganische Pulver aufgetragen, so dass beispielsweise ein anorganisches Pulver entsteht, welches mit der Mischung aus Polycarboxylat und Antioxidationsmittel beschichtet ist. Die Förderung oder der Transport des anorganischen Pulvers kann über dem Fachmann bekannte Vorrichtungen erfolgen, beispielsweise über Luftförderrinnen, wo der Transport pneumatisch und gravimetrisch erfolgt. Der Mahlprozess erfolgt üblicherweise in einer Zementmühle, beispielsweise in einer Kugelmühle. Es können aber grundsätzlich auch andere Mühlen, wie sie in der Zementindustrie bekannt sind, eingesetzt werden.

Es ist auch möglich, dass das Antioxidationsmittel in das Polycarboxylat einpolymerisiert wird, so dass das Kammpolymer das Antioxidationsmittel als Seitenkette enthält. Dies kann beispielsweise bei der Herstellung des Polycarboxylates erfolgen, beispielsweise über polymeranaloge Veresterung oder radikalische Polymerisation, insbesondere über radikalische Polymerisation.

Üblicherweise wird das Polycarboxylat Polymer oder das Zusatzmittel, welches mindestens ein Antioxidationsmittel und mindestens ein Polycarboxylat Polymer umfasst, in einer Menge von 0.001 bis 10 Gew.-%, bezogen auf das Gewicht des anorganischen Pulvers, insbesondere auf das Gewicht des Bindemittels, zugegeben.

Das Antioxidationsmittel wird in einer Menge von 0.0001 bis 1 Gew.-%, bevorzugt in einer Menge von 0.0001 bis 0.01 Gew.-%, bezogen auf das Gewicht des anorganischen Pulvers, insbesondere auf das Gewicht des Bindemittels, zugegeben.

Das Antioxidationsmittel kann aber auch getrennt vom Polycarboxylat Polymer zum anorganischen Pulver zugegeben werden. Beispielsweise geeignet ist, dass zuerst das Polycarboxylat Polymer und anschliessend das Antioxidationsmittel zum anorganischen Pulver zugegeben wird.

Geeignete Antioxidationsmittel sind beispielsweise ausgewählt aus der Gruppe substituierte Phenole, insbesondere sterisch gehinderte Phenole oder Hydrochinone.

Besonders geeignet sind Antioxidationsmittel, welche mindestens ein substituiertes Phenol oder ein substituiertes aromatisches Amin umfassen. Besonders geeignet sind sterisch gehinderte Phenole oder Hydroschinone oder sterisch gehinderte aromatische Amine.

Beispiele für sterisch gehinderte Phenole sind 2-t-Butyl-4,6-dimethylphenol, 2,6-di(t-butyl)-4-methylphenol (Butylhydroxytoluol, BHT), 2-t-Butyl-4-methoxyphenol (Butylhydroxyanisol, BHA), Pentaerythrityl-tetrakis-[3-(3,5-ditert.-butyl-4-hydroxyphenyl)-propionat] (Irganox® 1010), 2,6-Dioctadecyl-4-methylphenol, 2,4,6-Tri-t-butylphenol, ortho-tert-Butylphenol, 3,5-Bis(1,1-dimethylethyl)-4-hydroxybenzol-propionsäureester von C4-C22-Alkoholen, 4,4'-Butyliden-bis-(6-t-butyl-3-methylphenol), 4,4'-Methyliden-bis-(2,6-di-t-butylphenol), 3,5-Bis(1,1-ditert.-butyl)-4-hydroxyphenyl-propionsäureester von C4-C22- Alkoholen, 2,2'-Methylen-bis-(6-tert-butyl-4-methylphenol), 2,2-Bis-(4-hydroxyphenyl)-propan (Bisphenol A), 1,1-Bis-(5-t-butyl-4-hydroxy-2-methylphenyl)-butan, 2,2'-Methylen-bis-[4-methyl-6-(1-methylcyclohexyl)phenol], Tetrakis[methylen-3-(3,5-di-t-butyl-4-hydroxyphenyl)-propionat]methan, N,N'-Hexamethylenbis(3,5-di-t-butyl-4-hydroxy-hydrozimtsäureamid), Octadecyl-3-(3,5-di-t-butyl-4-hydroxyphenyl)propionat, 1,3,5-Tris-(3,5-di-t-butyl-4-hydroxybenzyl)isocyanurat, 1,1,3-Tris-(5-t-butyl-4-hydroxy-2-methylphenyl)butan, 1,3,5-Tris-(3,5-di-t-butyl-4-hydroxybenzyl)mesitylen, Ethylenglykol-bis[3,3-bis(3'-t-butyl-4'-hydroxyphenyl)butyrat], Di-(3-t-butyl-4'-hydroxy-5-methylphenyl)dicyclopentadien, 2,2'-Methylen-bis-(4-methyl-6-cyclohexylphenol), 1,3,5-Tri-(3,5-di-t-butyl-4-hydroxybenzyl)-2,4,6-trimethylbenzol (Irganox® 1330), 1,3,5-Tris-(4-t-butyl-3-hydroxy-2,6-dimethylbenzyl)-isocyanurat, 3,5-Di-t-butyl-4-hydroxyphenyl-propionsäureester, 5-t-Butyl-4-hydroxy-3-methylphenyl-propionsäureester, 3,5-Di-t-butyl-4-hydroxyphenylpropionsäureamide, 3,5-Di-(1,1-dimethylethyl)-4-hydroxybenzolpropionsäureester, 1,6-Hexandiol-bis-(3,5-di-t-butyl-4-hydroxyphenyl)propionat, Triethylenglykol-bis-3-(t-butyl-4-hydroxy-5-methylphenyl)-propionat, 2,2-Bis-(4-hydroxyphenyl)-propan, 2,2'-Thio-bis-(4-methyl-6-t-butylphenol), 2-Methyl-4,6-bis((octylthio)-methyl)phenol (Irganox® 1520), 4,4'-Thio-bis-(6-t-butyl-3-methylphenol), 2,2'-Thiodiethyl-bis-3-(3,5-di-t-butyl-4-hydroxyphenyl)propionat.

Bevorzugt sind 2,6-Di-t-butyl-4-methylphenol (BHT), Octadecyl-3-(3,5-di-t-butyl-4-hydroxyphenyl)propionat, 2,2'-Methylen-bis-(4-methyl-6-cyclohexylphenol), 2,2'-Methylen-bis-(4-methyl-6-t-butylphenol), Triethylenglykol-bis-3-(t-butyl-4-hydroxy-5-methylphenyl)-propionat, 2,2-Bis-(4-hydroxyphenyl)-propan und Tetrakis[methylen-3-(3,5-di-t-butyl-4-hydroxyphenyl)-propionat]methan, oder Antioxidationsmittel, wie sie unter dem Markennamen Irganox® der Firma Ciba Spezialitätenchemie vertrieben werden, insbesondere 2-Methyl-4,6-bis((octylthio)-methyl)phenol (Irganox® 1520), Pentaerythrityl-tetrakis-[3-(3,5-ditert.-butyl-4-hydroxyphenyl)-propionat] (Irganox® 1010), oder 1,3,5-Tri-(3,5-di-t-butyl-4-hydroxybenzyl)-2,4,6-trimethylbenzol (Irganox® 1330).

Beispiele für sterisch gehinderte Hydrochinone sind 2,6-Di-t-butyl-4-methoxyphenol, 2,5-Di-t-butyl-hydrochinon.

In einer bevorzugten Ausführungsform ist das Antioxidationsmittel ein substituiertes Phenol, insbesondere ein sterisch gehindertes Phenol, beispielsweise wie es unter dem Namen Irganox® der Firma Ciba erhältlich ist. Vorzugsweise ist das substituierte Phenol ausgewählt aus der Gruppe bestehend aus Butylhydroxitoluol (BHT), Butylhydroxianisol (BHA), Bisphenol A, Bisphenol F, Salicylsäure, Hydrochinon, Vanillin, Biphenyldiol, beispielsweise 4,4'-Biphenyldiol oder 2,2'-Biphenyldiol, Gallate und Phenolpolykondensate.

Unter dem Begriff "Polycarboxylat" wird im ganzen vorliegenden Text ein Polymer verstanden, welches Carboxy-Gruppen aufweist. Insbesondere handelt es sich bei der vorliegenden Erfindung um Polycarboxylatether (PCE) Kammpolymere, welche Polyoxyalkylenseitenketten aufweisen.

Besonders geeignete Polycarboxylate umfassen mindestens eine Hauptkette enthaltend Kohlenwasserstoffgruppen, mindestens eine Seitenkette umfassend mindestens eine Säuregruppe, insbesondere eine Carbonsäuregruppe, oder ein Salz davon, und mindestens eine Seitenkette umfassend mindestens eine Polyoxyalkylengruppe, wobei die Polyoxyalkylengruppe über ein Verbindungsstück, welches mindestens eine Ester-, Ether-, Amid- und/oder Imidgruppe, vorzugsweise mindestens eine Ester- oder Amidgruppe, noch mehr bevorzugt mindestens eine Ester- und Amidgruppe, umfasst, an die Hauptkette gebunden ist. Neben den Carbonsäuregruppen und den Polyoxyalkylengruppen können noch weitere funktionelle oder nicht-funktionelle Gruppen an die Hauptkette gebunden sein.

Das Verbindungsstück umfasst mindestens eine Ester-, Ether-, Amid-oder Imidgruppe, vorzugsweise eine Ester- oder Amidgruppe, vorzugsweise ausgewählt aus der Gruppe bestehend aus -COO-, -CO-NH-, -R-COO-, und - R-CO-NH-, wobei R unabhängig voneinander für einen C₁ - C₆ Alkylenrest steht. Das Polycarboxylat kann verschiedene Seitenketten umfassen welche mindestens eine Polyoxyalkylengruppe umfassen, und welche über verschiedene Verbindungsstücke an die Hauptkette gebunden sind. Beispielsweise kann das Polycarboxylat Seitenketten umfassen, welche über eine Ester-, Ether-, Amid- oder Imidgruppe oder Mischungen davon an die Hauptkette gebunden sind. In einem Polycarboxylat können also Ester-, Ether-, Amid- oder Imid-Verbindungsstücke gemischt vorkommen. Bevorzugt sind Polycarboxylate, bei denen ein Teil der Seitenketten umfassend mindestens eine Polyoxyalkylengruppe über eine Estergruppe und ein anderer Teil der Seitenketten umfassend mindestens eine Polyoxyalkylengruppe über eine Amidgruppe an die Hauptkette gebunden sind.

Die Polyoxyalkylengruppe basiert auf polymerisierten epoxidhaltigen Verbindungen, wie zum Beispiel auf Ethylenoxid, Propylenoxid, 1-Butylenoxid oder Phenylethylenoxid. Vorzugsweise enthält oder besteht die Seitenkette umfassend Polyoxyalkylengruppen aus Polyoxyethylengruppen, Polyoxypropylengruppen oder Mischungen von Oxyethylen- und Oxypropylengruppen.

In einer Ausführungsform umfasst das Polycarboxylat vorzugsweise
a) mindestens eine Säureeinheit **A** der Formel (I); und 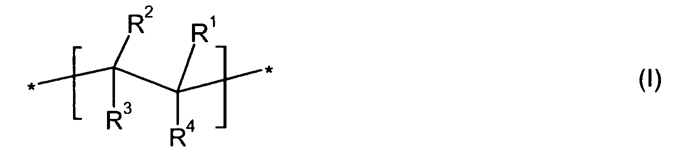
b) mindestens eine Struktureinheit **B** der Formel (II); 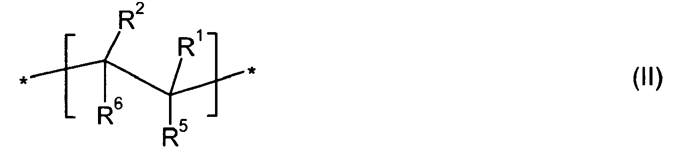 und gegebenenfalls
c) mindestens eine weitere Struktureinheit **C.**

Dabei stehen unabhängig voneinander R¹ und R² für H, COOM, CH₂COOM oder eine Alkylgruppe mit 1 bis 5 Kohlenstoffatomen, insbesondere für H oder CH₃, R³ steht unabhängig voneinander für H, CH₃, COOM oder CH₂COOM, insbesondere für H; und R⁴ steht unabhängig voneinander für einen Rest der Carbonsäure, insbesondere für COOM; oder R³ kann mit R⁴ einen Ring bilden zu -CO-O-CO-.

M bedeutet H, Alkalimetall, Erdalkalimetall oder andere zwei- oder dreiwertige Metallatome, Ammonium, Alkyl-Ammonium, oder eine Mischung davon, insbesondere H, Na, Ca/2, Mg/2, NH₄ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.

R⁵ steht unabhängig voneinander für einen Rest der Formel (III)

-(CH₂)ₓ-R⁷-(R⁸O)_{y}-R⁹ (III)

Dabei steht R⁷ unabhängig voneinander für ein Ester- oder Amid Verbindungsstück, vorzugsweise für -COO- oder -CO-NH-. R⁸ steht für eine C₂ - C₆ Alkylengruppe, vorzugsweise eine C₂ - C₄ Alkylengruppe oder eine Mischung von C₂, C₃ und/oder C₄ Alkylengruppen in einer beliebigen Reihenfolge; und R⁹ steht für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst.

R⁶ steht unabhängig voneinander für H, CH₃, COOM oder CH₂COOM oder einen Substituenten wie für R⁵ definiert, vorzugsweise für H.

Der Index x weist unabhängig voneinander den Wert 0 oder 1 auf; und y steht unabhängig voneinander für den Wert 3 - 250, vorzugsweise für 10 bis 120.

Beispiele für geeignete Säureeinheiten **A** sind Einheiten, die durch Polymerisation entstehen von Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, oder Derivate oder Analoga davon, wie beispielsweise das Maleinsäurehalbamid aus Maleinsäure und Sulfanilsäure, insbesondere das N-(4-Sulfophenyl)maleinsäureamid. Bevorzugt sind Monocarbonsäuren. Insbesondere geeignet als Säureeinheit **A** ist eine Einheit, entstanden durch Polymerisation einer (Meth)acrylsäureeinheit oder ein Salz davon. Unter "(Meth)acrylsäure" wird im gesamten vorliegenden Dokument sowohl Acrylsäure als auch Methacrylsäure oder Mischungen davon verstanden.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Die weitere Struktureinheit **C** kann eine weitere Ether-, Ester, Amid-oder Imideinheit, vorzugsweise eine Amid- oder Estereinheit umfassen. Beispielsweise kann die weitere Struktureinheit **C** Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxy-alkylen)oxyalkyl-, Poly(oxyalkylen)oxy-, Hydroxyethyloxycarbonyl-, Acetoxy-, Phenyl- oder N-Pyrrolidonylgruppen umfassen. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird.

Das Polycarboxylat kann eine Kombination von verschiedenen Struktureinheiten der jeweiligen Struktureinheiten von **A, B,** und gegebenenfalls **C** aufweisen. Beispielsweise können mehrere Struktureinheiten **A** gemischt im Polycarboxylat vorkommen, so zum Beispiel ein Gemisch von Methacrylsäureeinheiten mit Acrylsäureeinheiten. Oder es können mehrere unterschiedliche Ester- und/oder Amideinheiten **B** gemischt im Polymer **P** vorkommen, so zum Beispiel mehrere Estereinheiten **B** mit verschiedenen Substituenten R⁸. Bevorzugt ist beispielsweise die gemeinsame Verwendung von Ester- und Amideinheiten oder die gemeinsame Verwendung von unterschiedlichen Polyoxyalkylengruppen, insbesondere von Polyoxyethylen mit Polyoxypropylen, oder die gemeinsame Verwendung von Polyoxyalkylengruppen, insbesondere von Polyoxyethylen, mit unterschiedlichem Molekulargewicht.

In einer besonders bevorzugten Ausführungsform umfasst das Polycarboxylat mindestens eine Ester- und mindestens eine Amideinheit.

In einer bevorzugten Ausführungsform umfasst das Polycarboxylat 10 bis 90 Mol-%, vorzugsweise 20 bis 80 Mol-% der Säureeinheit **A** der Formel (I), 10 bis 90 Mol-%, vorzugsweise 20 bis 80 Mol-% der Struktureinheit **B** der Formel (II), und gegebenenfalls 0 bis 30 Mol-% der Struktureinheit **C,** jeweils bezogen auf die Gesamtmolmenge der Struktureinheiten von **A, B** und **C** im Polycarboxylat.

Die Abfolge der einzelnen Struktureinheiten **A, B,** und **C** im Polycarboxylat kann alternierend, statistisch, blockweise oder zufällig sein.

Das Polycarboxylat weist vorzugsweise ein Molekulargewicht M_{w} im Bereich von 8'000 - 200'000 g/mol, vorzugsweise 15'000 - 100'000 g/mol, besonders bevorzugt 25'000-80'000 g/mol, auf.

Unter 'Molekulargewicht' oder 'Molgewicht' versteht man im Sinne der Erfindung das Molekulargewichtsmittel M_{w}.

Das Polycarboxylat kann auf verschiedene Arten hergestellt werden. Es sind im Wesentlichen zwei Verfahren im Einsatz. In einem ersten Verfahren werden die Polymere in einer sogenannten polymeranalogen Umsetzung aus einem Polycarboxylat und den jeweiligen Alkoholen und/oder Aminen hergestellt. In einem zweiten Verfahren werden die Polymere aus den jeweiligen ungesättigten Carbonsäure-, und Ester- und/oder Amidfunktionenellen Monomeren durch radikalische Polymerisation hergestellt.

Besonders bevorzugte Polymere werden nach der polymeranalogen Reaktion gemäss dem ersten Verfahren hergestellt. Dabei wird ein Polymer, welches latente oder freie Carboxylgruppen enthält mit ein oder mehreren Verbindungen, die Amin- oder Hydroxylfunktionen enthalten unter Bedingungen umgesetzt, die zu teilweiser Amidierung beziehungsweise Veresterung der Carboxylgruppen führen. Die polymeranaloge Umsetzung weist den grossen Vorteil auf, dass aus kommerziell erhältlichen Polymeren aus α-,β-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1, EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polycarboxylate können auch in festem Aggregatszustand erhalten werden, wie in EP 1 348 729 A1 auf Seite 3 bis Seite 5 sowie in dessen Beispielen beschrieben.

In einem zweiten Herstellverfahren wird das Polycarboxylat über die radikalische Polymerisation von ungesättigten mono- oder di-Carbonsäuren mit ungesättigten Carbonsäureestern, ungesättigten Carbonsäureamiden, ungesättigten Carbonsäureimiden, Allylether oder Vinylether hergestellt werden. Die Carbonsäuren im fertigen Kammpolymer können in Form ihrer freien Säure oder ganz oder teilweise in Form ihrer Salze vorliegen. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Das Polycarboxylat wird in flüssiger Form, sowohl allein oder als Bestandteil eines Dispergiermittels, insbesondere eines Verflüssigers verwendet werden.

Das Polycarboxylat kann somit als einfaches Polycarboxylat oder als Mischungen mehrerer Polycarboxylat verwendet werden. Es können aber auch ein oder mehrere Polycarboxylate mit anderen Dispergiermitteln oder Dispergiermittelmischungen verwendet werden.

Die Polycarboxylate oder Mischungen, die die Polycarboxylate enthalten, können zur erfindungsgemässen Verwendung weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.

Falls das Polycarboxylat in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist. Je nach Art des Polycarboxylates entsteht eine Dispersion oder eine Lösung. Bevorzugt wird eine Lösung.

Die wässrige Lösung oder Dispersion kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze und Licht, Farbstoffe, Entschäumer, Beschleuniger, Verzögerer, Schaumbildner.

Das Polycarboxylat kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Das mindestens eine Antioxidationsmittel kann Bestandteil einer Polymermischung, insbesondere einer Polymerlösung, sein, oder getrennt in fester oder flüssiger Form zum Polycarboxylat oder zum anorganischen Pulver gegeben werden, oder zusammen mit dem Polycarboxylat und dem anorganischen Pulver vermahlen werden.

In einem weiteren Aspekt betrifft die vorliegende Erfindung die Verwendung von mindestens einem Antioxidationsmittel zur Herstellung temperaturstabiler Polycarboxylat Polymere in Gegenwart von anorganischem Pulver bei erhöhter Temperatur.

Um temperaturstabile Polycarboxylat Polymere herzustellen, welche auch noch in Gegenwart von anorganischem Pulver bei erhöhter Temperatur stabil sind, wird das Polycarboxylat Polymer vor, während, oder nach der Zugabe des Polymers zum anorganischen Pulver mit mindestens einem Antioxidationsmittel versetzt.

Vorzugsweise wird das Antioxidationsmittel zusammen mit dem Polycarboxylat zum anorganischen Pulver gegeben. Besonders bevorzugt erfolgt diese Zugabe vor dem Mahlprozess oder während der Förderung des anorganischen Pulvers zur Lagerstätte.

Es hat sich gezeigt, dass Antioxidationsmittel besonders geeignet sind, um Polycarboxylate, insbesondere Polycarboxylatether, welche in Gegenwart von anorganischen Pulvern, insbesondere von Zement, verwendet werden, auch bei erhöhter Temperatur zu stabilisieren. Überraschend ist, dass insbesondere substituierte Phenole oder substituierte aromatische Amine besonders geeignet sind, um Polycarboxylate zu stabilisieren, welche über eine grosse Oberfläche verteilt im anorganischen Pulver vorliegen. Denn in Gegenwart von anorganischen Pulvern liegen besondere Bedingungen vor, wie beispielsweise die genannte erhöhte Temperatur, sowie das Vorliegen einer grosse Oberfläche, bei denen eine mögliche Stabilisierung der Polycarboxylate erschwert ist. Normalerweise werden die Polycarboxylate bei diesen Bedingungen zersetzt, und bekannte Stabilisatoren sind nicht geeignet, um die Polycarboxylate zu stabilisieren. Es hat sich sogar gezeigt, dass mit den erfindungsgemäss verwendeten Antioxidationsmitteln eine Stabilisierung der Polycarboxylate bei besonders anspruchsvollen Bedingungen erreicht werden kann, wenn beispielsweise Polycarboxylate vor dem Mahlprozess zum Zement gegeben werden und anschliessend noch bei der Lagerung in Zementsilos erhöhten Temperaturen und hohen Drücken ausgesetzt sind.

Ebenfalls überraschend ist, dass die Stabilisierungswirkung über längere Zeit erhalten bleibt, vorzugsweise mindestens eine Woche, besonders bevorzugt mindestens 4 Wochen, während die bekannten Stabilisierungsmittel meist zur Stabilisierung bei bestimmten Bedingungen, welche nur über eine kurze Zeit auftreten, geeignet sind.

### Beispiele

Die Erfindung wird nun anhand von Beispielen näher erläutert.

### 1. Verwendete Antioxidationsmittel

**Tabelle 1: Verwendete Rohstoffe**

| **Nr.** | **Art** | **Bezeichnung** | **Hersteller** |
|---|---|---|---|
| **A-1** | 2-Methyl-4,6-bis((octylthio)-methyl)phenol | Irganox® 1520 L | Ciba Speciality Chemical |
| **A-2** | 2,2-Bis-(4-hydroxy-phenyl)-propan | Bisphenol-A | Nordmann, Rassmann GmbH |
| **V-1** | Ascorbinsäure | | Fluka |
| **V-2** | 4-Aminobenzoesäure | | Fluka |

### 2. Mörteltests

Die Wirksamkeit der erfindungsgemässen Polymeren wurde im Mörtel getestet.

In einem ersten Schritt wurde Portlandzement (Schweizer CEM I 42.5R) mit einem Polycarboxylat-Antioxidationsmittel Gemisch beschichtet. Dazu wurde der Zement über einen Trichter in eine Fördervorrichtung, welche vorzugsweise Luftförderrinnen umfasst, eingefüllt. Mit Hilfe von Druckluft wurde 0.3 Gew.-% bezogen auf den Zement einer wässrigen Lösung, welche eine wässrige Lösung eines Polycarboxylat-Verflüssigers (beispielsweise Sika® ViscoCrete® 3082, erhältlich bei Sika Schweiz AG) und ein in Tabelle 2 angegebene Menge eines Antioxidationsmittels (bezogen auf die wässrige Lösung des Polycarboxylat-Verflüssigers) enthält, im Bereich der Luftförderrinne zerstäubt und somit auf den Zement aufgetragen. Der beschichtete Zement wurde in einen Transportbehälter oder eine Lagervorrichtung weitertransportiert und dort bei Raumtemperatur oder bei 90°C für die in Tabelle 2 angegebene Dauer gelagert.

Nach der Lagerung wurde folgende Mörtelmischung hergestellt:

| Zusammensetzung der Mörtelmischung (**MM**): (Grösstkorn 8mm) | Menge in g |
|---|---|
| Beschichteter Portlandzement (Schweizer CEM I 42.5R) | 850 |
| Kalksteinfüller | 141 |
| Sand 0-1 mm | 738 |
| Sand 1-4 mm | 1107 |
| Sand 4-8 mm | 1154 |

Die Sande, der Füller und der mit Polycarboxylat und Antioxidationsmittel beschichtete Zement wurden 1 Minute in einem Hobart-Mischer trocken gemischt. Innerhalb von 30 Sekunden wurde das Anmachwasser zugegeben und noch weitere 2.5 Minuten gemischt. Die Gesamt-Mischzeit nass war 3 Minuten. Der Wasser/Zement-Wert (w/z-Wert) betrug 0.46. Zur Bestimmung der Wirksamkeit wurde das Ausbreitmass (ABM) (Tabelle 2) des Mörtels gemäss EN 1015-3 nach 0, 30 und 60 Minuten bestimmt.

Zur Bestimmung der Wirksamkeit der erfindungsgemässen Antioxidationsmittel wurde der Zement mit den verschiedenen Antioxidationsmittel beschichtet (siehe Tabelle 2). Die Beispiele**1** bis **9** stellen erfindungsgemässe Beispiele dar, während die Beispiele **10** bis **17** Vergleichsbeispiele darstellen.

**Tabelle 2: Ausbreitmass (ABM) einer Mörtelmischung in mm nach 0, 30 und 60 Minuten (min), nach einer Lagerung des beschichteten Zements bei Raumtemperatur (RT) und bei 90°C von 0, 21 und 35 Tagen (d).**

| **Nr.** | **Antioxidationsmittel** | **Gew.-% Antiox. Bez. auf ViscoCrete** ® **3082** | **Tage (d) nach Lagerung** | | **ABM (mm)** | | |
|---|---|---|---|---|---|---|---|
| | | | **RT** | **90 °C** | **0 min** | **30 min** | **60 min** |
| **1** | **A-1** | 5 Gew.-% | 0 | 0 | 211 | 189 | 183 |
| **2** | **A-1** | 5 Gew.-% | 35 | | 213 | 184 | 177 |
| **3** | **A-1** | 5 Gew.-% | | 21 | 221 | 202 | 184 |
| **4** | **A-1** | 5 Gew.-% | | 35 | 200 | 180 | 165 |
| **5** | **A-1** | 2.5 Gew.-% | | 21 | 222 | 174 | 157 |
| **6** | **A-2** | 5 Gew.-% | 0 | 0 | 202 | 176 | 173 |
| **7** | **A-2** | 5 Gew.-% | 35 | | 212 | 183 | 181 |
| **8** | **A-2** | 5 Gew.-% | | 21 | 201 | 172 | 168 |
| **9** | **A-2** | 5 Gew.-% | | 35 | 204 | 179 | 167 |
| **10** | **V-1** | 5 Gew.-% | 0 | 0 | 203 | 175 | 173 |
| **11** | **V-1** | 5 Gew.-% | | 21 | 174 | 149 | 145 |
| **12** | **V-2** | 0.4 Gew.-% | 0 | 0 | 204 | 169 | 161 |
| **13** | **V-2** | 0.4 Gew.-% | | 21 | 165 | 146 | 133 |
| **14** | - | - | 0 | 0 | 211 | 190 | 178 |
| **15** | - | - | 35 | | 215 | 186 | 184 |
| **16** | - | - | | 21 | 163 | 148 | 136 |
| **17** | - | - | | 35 | 162 | 137 | 135 |

Die Resultate in Tabelle 2 zeigen, dass die erfindungsgemässen Antioxidationsmittel geeignet sind, um Polycarboxylate auch bei erhöhter Temperatur (90°C) zu stabilisieren. Bei Raumtemperatur (RT) können die Polycarboxylate nach längerer Lagerzeit (35 Tage) ihre Wirkung aufrecht erhalten und zeigen gute Verflüssigungseigenschaften mit einem guten Ausbreitmass. Werden die Polycarboxylate jedoch bei erhöhter Temperatur (90°C) gelagert, sieht man deutliche Unterschiede zwischen den erfindungsgemässen Beispielen mit Antioxidationsmittel und den Vergleichsbeispielen ohne Antioxidationsmittel.

Die erfindungsgemässen Beispiele mit Antioxidationsmittel weisen auch nach über drei beziehungsweise vier Wochen (hier nach 21 beziehungsweise 35 Tagen) ein gewünschtes Ausbreitmass von über 200 mm auf und bestätigen, dass die Polycarboxylate auch bei hoher Temperatur von 90°C nicht zersetzt werden, sondern ihre Wirkung aufrecht erhalten können.

Die Vergleichsbeispiele mit dem Vergleichsstabilisator **V-1** oder **V-2** weisen bereits nach 21 Tagen bei einer Lagerung von 90°C schlechte Werte auf. Bei den Vergleichsbeispielen ohne Antioxidationsmittel oder Stabilisator fällt das Ausbreitmass schon nach wenigen Tagen unter die gewünschten 200 mm und es zeigt sich damit, dass die Polycarboxylate nicht mehr ihre volle Wirkung entfalten können, da sie bei der Lagerung von 90°C zersetzt werden.

## Patentansprüche

1. Verfahren zur Stabilisierung von Polycarboxylaten in Gegenwart von anorganischem Pulver bei erhöhter Temperatur, wobei das Polycarboxylat Polymer mit mindestens einem Antioxidationsmittel versetzt wird, **dadurch gekennzeichnet, dass** das Polycarboxylat in flüssiger Form in einer Menge von 0.001 - 10 Gew.-%, bezogen auf das Gewicht des anorganischen Pulvers, zum anorganischen Pulver zugegeben wird und wobei das wenigstens eine Antioxidationsmittel in einer Menge von 0.0001 bis 1 Gew.-%, bezogen auf das Gewicht des anorganischen Pulvers, zum anorganischen Pulver zugegeben wird, wobei das mindestens eine Antioxidationsmittel ein substituiertes Phenol ist, welches ausgewählt ist aus der Gruppe bestehend aus Butylhydroxitoluol, Butylhydroxianisol, Kresol, Bisphenol A, Bisphenol F, Salicylsäure, Hydrochinon, Vanillin, Biphenyldiol, Gallate und Phenolpolykondensate.

2. Verfahren nach Anspruch 1, **dadurch gekennzeichnet, dass** das mindestens eine Antioxidationsmittel ausgewählt ist aus der Gruppe bestehend aus substituierte Phenole.

3. Verfahren nach einem der vorhergehenden Ansprüche, **dadurch gekennzeichnet, dass** das Polycarboxylat Polymer mindestens eine Säureeinheit, mindestens eine Einheit umfassend Polyoxyalkylengruppen und gegebenenfalls mindestens eine weitere Einheit umfasst.

4. Verfahren nach einem der vorhergehenden Ansprüche, **dadurch gekennzeichnet, dass** das Polycarboxylat Polymer erhältlich ist durch oder hergestellt wird mittels polymeranaloger Reaktion der Veresterung und gegebenenfalls Amidierung einer Polycarbonsäure.

5. Verfahren nach einem der vorhergehenden Ansprüche, **dadurch gekennzeichnet, dass** das anorganische Pulver ein mineralisches Bindemittel, insbesondere ein hydraulisches Bindemittel ausgewählt aus der Gruppe Zement, insbesondere Portlandzemente oder Tonerdeschmelzzemente und respektive deren Mischungen mit Flugaschen, Silica fume, Schlacke, Hüttensande und Kalksteinfüller oder gebrannter Kalk, ein latent hydraulisches Pulver, inertes mikroskopisches Pulver oder Gips, ist.

6. Verfahren nach einem der vorhergehenden Ansprüche, **dadurch gekennzeichnet, dass** die erhöhte Temperatur mindestens 40°C, vorzugsweise mindestens 80°C beträgt.

7. Verfahren nach einem der vorhergehenden Ansprüche, **dadurch gekennzeichnet, dass** das Antioxidationsmittel in einer Menge von 0.01 bis 50 Gew.-%, bevorzugt 0.1 bis 15 Gew.-%, bezogen auf das Gesamtgewicht des Polycarboxylat Polymers, verwendet wird.

8. Verfahren nach einem der vorhergehenden Ansprüche, **dadurch gekennzeichnet, dass** die erhöhte Temperatur bei der Lagerung von, mit temperaturstabilisierten Polycarboxylaten beschichteten, anorganischem Pulver auftritt.

9. Verfahren nach einem der vorhergehenden Ansprüche, **dadurch gekennzeichnet, dass** das mindestens eine Antioxidationsmittel beim Fördern des anorganischen Pulvers, insbesondere beim Fördern von Zement, auf das anorganische Pulver aufgetragen wird.

10. Verfahren nach einem der Ansprüche 1 bis 7, **dadurch gekennzeichnet, dass** die erhöhte Temperatur beim Mahlen des anorganischen Pulvers und gegebenenfalls anschliessender Lagerung auftritt.

11. Verfahren nach einem der vorhergehenden Ansprüche, **dadurch gekennzeichnet, dass** die Stabilisierung des Polycarboxylat Polymers mindestens eine Woche, vorzugsweise mindestens 4 Wochen, erhalten bleibt.

## Claims

1. Method for stabilizing polycarboxylates in the presence of inorganic powder at elevated temperatures, whereby the polycarboxylate polymer is mixed with at least one antioxidant, **characterized in that** the polycarboxylate is added to the inorganic powder in liquid form in an amount of 0.001 - 10 % by weight, relative to the weight of the inorganic powder and, and where the at least one antioxidant in an amount of 0.0001 to 1 % by weight, relative to the weight of the inorganic powder, is added to the inorganic powder, where the at least one antioxidant is a substituted phenol, which is selected from the group consisting of butyl hydroxy toluene, butyl hydroxy anisole, cresol, bisphenol A, bisphenol F, salicylic acid, hydroquinone, vanillin, biphenyldiol, gallates and phenol polycondensates.

2. Method according to Claim 1, wherein the at least one antioxidant is selected from the group that consists of substituted phenols.

3. Method according to one of the preceding claims, wherein the polycarboxylate polymer comprises at least one acid unit, at least one unit that comprises polyoxyalkylene groups, and optionally at least one additional unit.

4. Method according to one of the preceding claims, wherein the polycarboxylate polymer can be obtained or is produced by means of polymer-like reaction of the esterification and optionally amidation of a polycarboxylic acid.

5. Method according to one of the preceding claims, wherein the inorganic powder is a mineral binder, in particular a hydraulic binder that is selected from the group of cement, in particular Portland cements or aluminous cements, and their respective mixtures with flue ash, silica fume, slag, granulated cinders and lime rock fillers or fired chalk, a latent hydraulic powder, inert microscopic powder, or gypsum.

6. Method according to one of the preceding claims, wherein the elevated temperature is at least 40°C, preferably at least 80°C.

7. Method according to one of the preceding claims, wherein the antioxidant is used in an amount of 0.01 to 50% by weight, preferably 0.1 to 15% by weight, relative to the total weight of the polycarboxylate polymer.

8. Method according to one of the preceding claims, wherein the elevated temperature occurs during the storage of inorganic powder coated with temperature-stabilized polycarboxylates.

9. Method according to one of the preceding claims, wherein the at least one antioxidant is applied on the inorganic powder when the inorganic powder is conveyed, in particular when the cement is conveyed.

10. Method according to one of Claims 1 to 7, wherein the elevated temperature occurs during the milling of the inorganic powder and optionally subsequent storage.

11. Method according to one of the preceding claims, wherein the stabilization of the polycarboxylate polymer is maintained for at least one week, preferably at least 4 weeks.

## Revendications

1. Procédure de stabilisation de polycarboxylates en présence de poudre anorganique en cas d'élévation de température, le polymère polycarboxylate étant mélangé avec au moins un agent antioxydant, et **caractérisée par le fait que** le polycarboxylate est ajouté en phase liquide à une quantité de 0.001 - 10 % du poids par rapport au poids de la poudre anorganique à cette poudre anorganique et que l'agent antioxydant, au minimum unique, est ajouté à la poudre organique selon une quantité de 0.0001 à 1 % du poids par rapport au poids de la poudre anorganique, l'agent antioxydant, au minimum unique, étant un phénol sélectionné dans le groupe composé du butylhydroxytoluène, du butylhydroxyanisole, du crésol, du bisphénol A, du bisphénol F, de l'acide salicylique, de l'hydroquinone, de la vanilline, du biphényldiol, le gallate et des polycondensés de phénol.

2. Procédure selon la revendication 1, **caractérisée par le fait que** l'agent antioxydant, au minimum unique, est choisi dans le groupe comportant les phénols substitués.

3. Procédure selon l'une des revendications précédentes, **caractérisée par le fait que** le polymère polycarboxylate comprend au minimum une unité acide, au minimum une unité comprenant des groupes polyoxyalkylènes et, le cas échéant, au moins une autre unité.

4. Procédure selon l'une des revendications précédentes, **caractérisée par le fait que** le polymère polycarboxylate est obtenu ou fabriqué à partir d'une réaction de type polymère d'estérification ou, le cas échéant par amidification d'un acide polycarbonique.

5. Procédure selon l'une des revendications précédentes, **caractérisée par le fait que** la poudre anorganique est un liant, en particulier un liant hydraulique, choisi dans le groupe des ciments, en particulier les ciments Portland ou les ciments d'alumine et dont les mélanges respectifs avec des cendres volantes, de la fumée de silice, des scories, du sable de première fusion, des charges de chaux ou de la chaux vive, constituent une poudre hydraulique latente, une poudre ou un plâtre microscopique inerte.

6. Procédure selon l'une des revendications précédentes **caractérisée par le fait que** l'élévation de température atteint au moins 40°C, mais de préférence au moins 80°C.

7. Procédure selon l'une des revendications précédentes, **caractérisée par le fait que** l'agent antioxydant est utilisé à raison de 0,01 à 50 % du poids, de préférence de 0,1 à 15 % du poids par rapport au poids total du polymère polycarboxylate.

8. Procédure selon l'une des revendications précédentes **caractérisée par le fait que** l'augmentation de température apparaît lors du stockage de la poudre anorganique revêtue de polycarboxylates stabilisateurs thermiques.

9. Procédure selon l'une des revendications précédentes, **caractérisée par le fait que** l'agent antioxydant, au minimum unique, est appliqué sur la poudre anorganique lors du convoyage de la poudre anorganique, en particulier lors du convoyage de ciment.

10. Procédure selon l'une des revendications 1 à 7, **caractérisée par le fait que** l'augmentation de température apparaît lors de la mouture de la poudre anorganique et, le cas échéant, lors du stockage consécutif.

11. Procédure selon l'une des revendications précédentes **caractérisée par le fait que** la stabilisation du polymère polycarboxylate est conservée pour une durée minimale d'une semaine, mais de préférence de 4 semaines au moins.
